(19) Europäisches Patentamt
European Patent Office
Office européen des brevets

(11) **EP 2 339 487 A2**

(12) **EUROPEAN PATENT APPLICATION**
published in accordance with Art. 153(4) EPC

(43) Date of publication:
**29.06.2011 Bulletin 2011/26**

(51) Int Cl.:
***G06F 17/50*** (2006.01)

(21) Application number: **09740710.0**

(22) Date of filing: **03.09.2009**

(86) International application number:
**PCT/ES2009/070363**

(87) International publication number:
**WO 2010/026273 (11.03.2010 Gazette 2010/10)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **03.09.2008 ES 200802545**

(71) Applicant: **Airbus Operations S.L.**
**28906 Madrid (ES)**

(72) Inventors:
• **DEL CAMPO SUD, David**
**E-28400 Madrid (ES)**

• **PERDONES DÍAZ, David**
**E-28925 Madrid (ES)**
• **ESQUEJ ALONSO, Roberto**
**E-28051 Madrid (ES)**
• **DE PABLO FOUCE, Valentín**
**E-28029 Madrid (ES)**
• **OSSORIO CONTRERAS, Victor**
**E-28430 Madrid (ES)**

(74) Representative: **Elzaburu Marquez, Alberto**
**Elzaburu S.L.P.**
**Miguel Angel 21,**
**28010 Madrid (ES)**

(54) **METHOD AND SYSTEM FOR ADAPTING A MULTI-BLOCK STRUCTURED MESH OF AN OBJECT TO A MODIFICATION IN ITS GEOMETRY**

(57) A computer-aided method for adapting a multi-block mesh topology of an object (11) to a modification in its geometry resulting from an operation defined in respect to some spatial directions, the method being used in the design of said object (11) by means of numerical simulation in structured meshes, comprising the following steps: a) providing the starting geometry (21) and mesh topology description (31); b) finding key points (25); c) finding the set of key vertexes placed at said key points (25); d) finding all the reference vertexes seeking for the vertexes connected to the key vertexes along said spatial directions; e) performing the geometrical operation and obtaining the adapted mesh topology moving said set of key vertexes to the position determined by the modified geometry (23) and the rest of vertexes proportionally to the displacement of the corresponding key vertex. The invention also refers to a system for carrying out said method.

FIG. 1

Printed by Jouve, 75001 PARIS (FR)

**Description**

**FIELD OF THE INVENTION**

The present invention refers to methods and systems for adapting a multi-block structured mesh topology of an object to a modification in its geometry, particularly in the aeronautical field.

**BACKGROUND OF THE INVENTION**

Nowadays, use of Computational Fluid Dynamics (CFD) or other analytical schemes is extended in the aeronautical industry as well as in other industries. In order to reduce investment in Wind Tunnel Tests simulation is increasingly used in design activities.

CFD discretizes the physical domain into small cells where the Navier-Stokes equations or simplifications of them, for example the Reynolds Averaged Navier-Stokes, are computed. That implies that in order to perform a good computation one needs a good mesh.

The meshes used in design activities using numerical simulation tools such as CFD are of three types: entirely structured, totally unstructured or hybrid, that is a mixture of these two mesh types.

Structured meshes are meshes whose connectivity is regular and fixed by the topology: each inner vertex is topologically connected to his neighbours inside the block. Also the number of cells are propagated inside the block and to the neighbour blocks. All nodes inside a structured mesh can be located using indexes (I,j,k), so that connectivity is explicit.

Unstructured meshes have a completely arbitrary connectivity: a vertex of the mesh can belong to any number of cells and each cell can have any number of edges or sides. The topological data therefore have to be permanently stored to explicitly know the neighbours of each node. The memory cost involved by the use of an unstructured mesh can therefore become very rapidly penalizing.

For complex geometries structured meshes are divided in several blocks, creating multiblock-structured-meshes in which the actual geometry is formed by several structured blocks, having structurally ordered meshes inside them.

In the design or analysis of many industrial products using computational simulation tools that require the use of multi-block structured meshes (entirely or partially), it is necessary, particularly in the aeronautical field, the study of several different geometrical configurations for reaching the final shape. In this respect a common procedure is, firstly, selecting a starting geometry from the point of view of any physical magnitude and, secondly, carrying out an optimization process studying several geometries generally obtained from the starting one by performing small modifications on it (e.g. rotation of some elements).

Topology is the arrangement in which the blocks and vertexes of a mesh are connected to each other. Vertexes are linked to each other by edges. Vertexes and edges form the multi-block structure. The structured mesh is finally calculated for each block. This means that different types of bodies will use different mesh topologies, while similar objects will use different meshes but within the same topology (same vertex-edge-block arrangement, although not identically placed in space). For example, some topologies related to aircrafts are a body-tails topology, a wing-body-tails topology, or a T-tail topology.

Once the object in question is meshed, according to its topology, all geometrical configurations to be studied in the design loop will have the same mesh topology because they are obtained modifying a previous geometry.

As the creation of a multi-block structured mesh is currently a very hardworking and time-consuming task, it is desirable to have a method allowing an easy adaptation of an existing mesh to a modified geometry of the object in question. This would save a lot of human meshing time leading to an increase in traceability and mesh quality (avoiding human errors) and reducing lead-time. Up to now, even a slight modification of the base geometry requires either generating a new blocking structure for it, in order to generate its mesh, in a really time-consuming process, either to adapt the base block structure manually.

**SUMMARY OF THE INVENTION**

It is an object of the present invention to provide methods and systems for adapting the multi-block mesh topology of an object, particularly an aircraft or an aircraft part, to a modification in its geometry, according to a predefined procedure, said methods and systems being applicable in the design of said object by means of numerical simulation, particularly a CFD simulation, in entirely or partially structured meshes.

It is another object of the present invention to provide methods and systems for adapting the multi-block mesh topology of an object, particularly an aircraft or an aircraft part, to a modification in its geometry, according to a predefined procedure carried out at least in part using computer programs, said methods and systems being applicable in the design of said object by means of numerical simulation, particularly a CFD simulation, in entirely or partially structured meshes.

In one aspect, these and other objects are met by providing a computer-aided method for adapting a multi-block mesh topology of an object to a modification in its geometry resulting from an operation defined in respect to one or more spatial directions, the method being used in the design of said object by means of numerical simulation in entirely or partially structured meshes, comprising the following steps:

-   Providing the starting geometry of said object and the starting mesh topology description.

- Finding a set of key points in the starting geometry as the intersections of representative surfaces or curves of said object.
- Finding the set of key vertexes in the starting mesh topology placed at said key points.
- Finding all the reference vertexes involved in said operation seeking for the vertexes connected to said set of key vertexes along said one or more spatial directions.
- Performing said operation over the starting geometry and obtaining the adapted mesh topology moving said set of key vertexes to the position determined by the modified geometry and moving the rest of reference vertexes proportionally to the displacement of the corresponding key vertex.

In a preferred embodiment the step of finding the key points is carried out using a data base containing the set of needed key points and the way to find them for a set of standard geometry types (e.g. conventional tail aircraft or a T-tail aircraft). Hereby a highly automated method is achieved.

In another aspect, the above-mentioned objects are met by providing a system for adapting a multi-block structured mesh topology of an object to a modification in its geometry resulting from an operation defined in respect to one or more directions, the system being used in the design of said object by means of numerical simulation in entirely or partially structured meshes, comprising:

- A computer-implemented simulation model of said object.
- Computer programs for carrying out at least in part the following operations:

  - Loading the starting geometry of said object and the starting mesh topology description.
  - Finding a set of key points in the starting geometry as the intersections of representative surfaces or curves of said object.
  - Finding the set of key vertexes in the starting mesh topology placed at said key points.
  - Finding all the reference vertexes involved in said operation seeking for the vertexes connected to said set of key vertexes along said one or more spatial directions.
  - Performing said operation over the starting geometry and obtaining the adapted mesh topology moving said set of key vertexes to the position determined by the modified geometry and moving the rest of reference vertexes proportionally to the displacement of the corresponding key vertex.

Other characteristics and advantages of the present invention will be clear from the following detailed description of embodiments illustrative of its object in relation to the attached figures.

**DESCRIPTION OF THE DRAWINGS**

Figure 1 shows a horizontal tail plane (HTP) starting geometry and a horizontal tail plane modified geometry after a rotation operation.
Figures 2 and 3 show the starting and modified meshes of the horizontal tail plane (only a zone around the HTP-Leading edge intersection) after completing the rotation operation.
Figure 4 shows a key point in a horizontal tail plane.
Figure 5 illustrates the procedure for moving the vertexes involved in the rotation operation.

**DETAILED DESCRIPTION OF THE INVENTION**

**I.- Method**

A description of a preferred embodiment of a method according to this with respect to the horizontal tail plane (HTP) of an aircraft follows. The method comprises the following steps:

**a) Providing the starting geometry and mesh topology description**

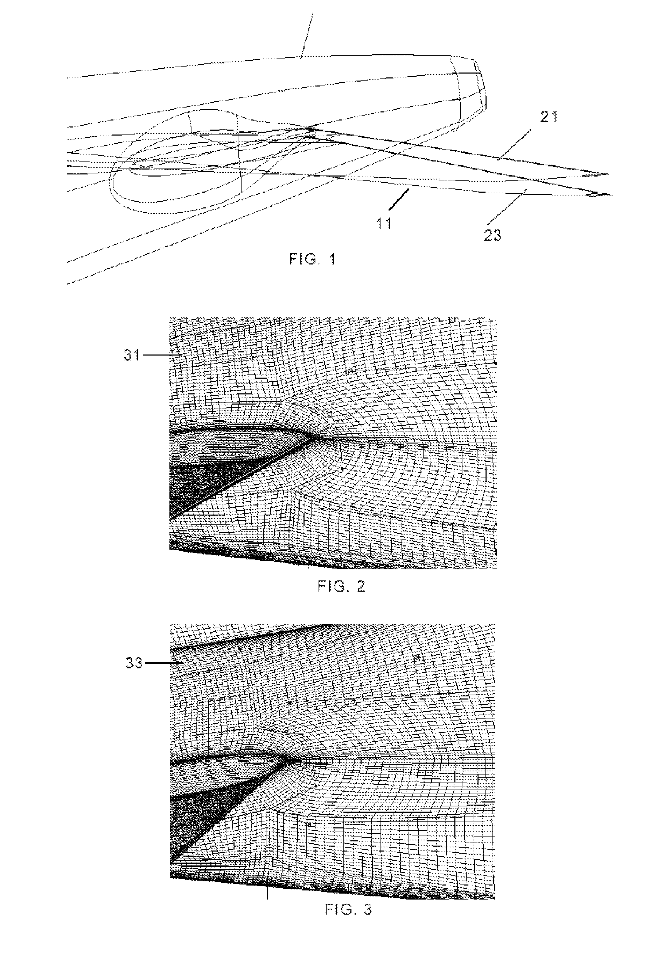

The input consist in a starting geometry 21 of the horizontal tail plane 11 (see Figure 1) and in a topology description of the corresponding starting mesh 31 (see Figure 2).
The starting geometry 21 can be provided in a CAD format.
The topology of the starting mesh 31 (generated following any known procedure) is provided using a given naming criteria for identifying all geometrical entities (curves, surfaces and materials).

**b) Finding key points**

In this step a set of key points is identified. These are the geometrical points that will be taken as a reference to start searching for all the reference vertexes. They should be univocal and representative of the geometry. Their positions will represent the origin from which to start searching for all the vertexes needed for the mesh topology adaptation, so they will be generally placed in geometrical extremes of the object (e.g. the wingtip of an aircraft or the prow of a boat). The identification of each key point is done as the intersection of the corresponding geometrical entities.
The key points to be identified depend on the object being designed, taking into account that the object or its parts should be oriented along preferential directions.

For example, if we consider that in an aircraft, fuselage is oriented along the X axis, wing and horizontal tail plane along the Y axis, and vertical tail plane along the Z axis, the key points would be placed on the horizontal tail plane tips, the vertical tail plane tip, the wing tips (all of them identified as intersection of the corresponding leading edge and trailing edge curves) the nose and the rear.

In a preferential embodiment the identification of the key points is made using a data base containing the set of needed key points and the way to find them (curve-curve or curve-surface intersection), for a set of standard geometry types. This data base ensures the use of the same set of key points for a given geometry, contributing to the method standardization.

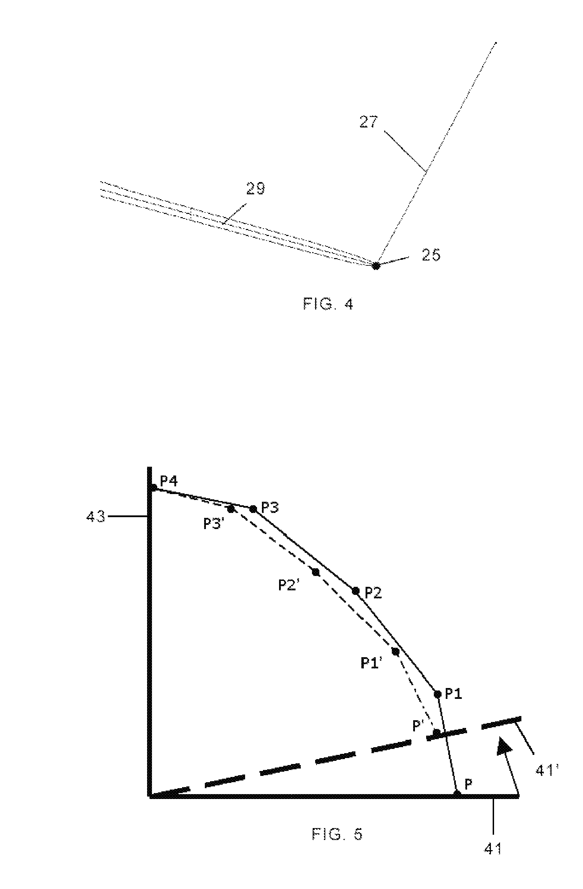

In the case of the horizontal tail plane 11 being considered in this description the key point 25 (see figure 4) will be identified as the intersection of the HTP leading edge 27 and the HTP trailing edge middle line 29.

**c) Finding key vertexes**

In this step the vertexes closest to the key points are identified.

While points, curves and surfaces are geometrical entities defined by their three coordinates, vertexes are topological entities. Vertexes are defined by their coordinates and connectivity (the way in which ones are connected to others by edges).

After identifying the key points, the coordinates of each vertex are retrieved. After that, the distances from each vertex to each key point are calculated and the nearest vertex to each key point (the key vertexes of the blocking structure) are identified.

**d) Finding the reference vertexes**

In this step the reference vertexes involved in the modification of the geometry of the object are found which is, usually, the result of operations such as rotations or translations applied to the base geometry, for example, in the case of the horizontal tail plane 11 that it is being considered in this description, the result of applying a rotation of 5 degrees for obtaining the rotated geometry 23 shown in Figure 1.

This step is carried out using a procedure that seeks for new vertexes along any desired direction in order to find all the vertexes needed for the operation. In each searching step, we can consider X, Y, Z directions, or any other direction given by a vector. As the geometry type is known, and the point represented by each key vertex is also known (e.g. a wingtip) the set of vertexes that should be founded while advancing in a particular direction is also known (e.g. from a wingtip key vertex, while advancing in -Y direction, the leading edge vertexes should be founded). Of course we refer to an approximate direction, this is, the path, formed by connecting edges, that better follows the desired direction. The direction or directions to be followed from each key vertex may be also incorporated to the above-mentioned data base in order to avoid user decisions.

This procedure checks the connectivity of each vertex (identifies the edge that connects it with its neighbours), and calculates the normalized vector that defines the direction of each one. By using the scalar product, the angle formed by each of the edges with each direction (also defined as a normalized vector) is calculated and therefore we can identify a set of vertexes by advancing in the desired direction.

Let us consider that we want to find the vertex P that is connected to vertex Q by an edge which direction is the closest one to the one defined by the vector v in the preferential direction corresponding to the operation. Vector v will usually be (1,0,0) or (0,1,0) or (0,0,1) as these are the typical preferential directions. Vertex P is joined to a set of neighbouring vertexes $V_j$ by vectors $P_j$. Therefore Q is the vertex $V_j$ so that its associated angle $\alpha_j$ is minimum:

$$\alpha_j = \left| ar\cos \frac{\vec{v} \cdot \vec{P_j}}{\left|\vec{v}\right| \cdot \left|\vec{P_j}\right|} \right|$$

This way we have advanced topologically one vertex along an edge, in the closest topological direction to our desired spatial direction, defined by vector v. By using this procedure, we will search for vertexes, advancing from one to another. The exact directions and number of steps to advance from each key vertex should be defined specifically for each topology, as it was done when selecting the key points. As the topology is known in advance, the relevant directions we are interested to seek are also known and we will be able to identify all the necessary reference vertexes. While advancing this way we will always know in which vertex we are in each moment. At the end of this process, all the reference vertexes necessary for future operations will be identified (not only the key ones). Since the topology is known, while identifying the reference vertexes, their function will be marked. This means that for each vertex we will keep the following information: its name (or ID number), its coordinates, and its topological position (e.g. three steps advancing in the X direction and one step in the -Z direction, starting from the HTP tip key vertex). This procedure is the essence of the method: since the mesher does not have to visually identify any vertex, the whole process can be performed without even having to see the 3D topology.

In this step it is also necessary to identify the projected vertexes, i.e. the ones attached to a curve or surface of the geometry, that shall be distinguished from the volumetric vertexes that are unattached to any geometrical entity, since obviously, these constrains should be kept in the final files. We can do this just by checking the distance from the vertex to the curve or surface, measured perpendicularly to it. We will consider a vertex to be projected when this distance is minor than a certain tolerance. This tolerance is defined 2/1000 of the length of the shortest edge connecting the considered vertex. This information and the name of the geometrical entity to which a vertex is projected will also be kept.

**e) Performing the geometrical operation and the adaptation of the multi-block structured mesh topology**

In this step both the geometrical and the blocking-related transformations are carried out.

Once the reference vertexes and their function are identified, blocking-related operations are possible. We will distinguish two cases:

- Translation-rotation, when the modified geometry differs from the main one in the translation or rotation of some parts (e.g., in an aircraft, we want to study the same aircraft as the main one, with a 5 degree rotation of the HTP).
- Reprojections, when the main geometry is slightly deformed (e.g. in an aircraft we want to study the effect of increasing the HTP span in 1 meter by a geometrical dilatation).

When just a rotation or translation is required, we can easily apply it directly over the blocks that constitute the affected parts, since blocks to be moved and rotated are easily identified as belonging to a certain part. Moving blocks implies moving all projected vertexes and edges. After performing the block rotation, it is necessary to rearrange the position of the nearby topology so that the mesh doesn't suffer big deformations in those zones. The algorithms used for this will take into account the vertexes projected on the rotated parts (that have already been moved as needed) and the ones projected on some fixed reference curve or surface (that should be kept in their place). Then, by searching along the direction that goes from one part to another, the volumetric vertexes that are in-between are identified, and moved in an amount that is inversely proportional to their distance to the moving part. This is illustrated in Figure 5 where vertex P projected in a rotating part 41 becomes P' in the rotated part 41' and volumetric vertexes P1, P2 and P3 become P1', P2' and P3'. P4 remain in the same position because is a vertex projected in a non-moving part 43.

In more general terms, let us consider a vertex P that is projected on a rotating part. Since it should be kept projected, the displacement of this vertex is given by geometrical considerations. Let us call $\mu$ to its displacement vector. Let us consider that P is joined to $P_1$, $P_1$ to $P_2$, and so on until the last edge that joins $P_{n-1}$ to $P_n$. $P_n$ is either a vertex projected over a non-moving part (and therefore, its displacement should be identically 0), either a vertex far away enough from the moving parts (so that no displacement is necessary). The sequence $P\text{-}P_1\text{-}...\text{-}P_n$ has been identified in the previous step. Let us call $d_j$ to the distance from vertex $P_j$ to vertex P along the defined edges path. This means that

$$d_1 = \left|\overrightarrow{PP_1}\right|, \quad d_2 = \left|\overrightarrow{PP_1}\right| + \left|\overrightarrow{P_1P_2}\right| \text{ and so on. There-}$$

fore, $d_n$ is the total distance from P to $P_n$ measured along the considered edges path. The displacement vector of vertex $P_j$ is given by:

$$\left|\overrightarrow{u}\right| \cdot \left(1 - \frac{d_j}{d_n}\right) \cdot \frac{\overrightarrow{P_jP_{j+1}}}{\left|\overrightarrow{P_jP_{j+1}}\right|}$$

When a reprojection (adaptation of a given blocking to a modified geometry) is required, the key vertexes (always projected vertexes) will be moved to the new positions (e.g. in an aircraft, tip HTP vertex to the new intersection of HTP leading and trailing edges) while volume vertexes will be displaced in certain distances and directions, calculated with the same algorithm described for the rotation case. This process is performed over all the vertexes that have been identified as projected over a particular curve or surface, while keeping this projection, and then over the rest of the reference vertexes (volume vertexes).

**II.- System**

A preferred embodiment of a system according to the present invention comprises:

a) A computer-implemented CFD model using the commercial software package ANSYS ICEM CFR.
b) Computer programs for carrying out the above-described method such ICEM-TCL scripts, i.e. code in TCL language including special ICEM-CFD commands in order to perform all operations that can be performed when running the program in graphical mode.

A brief description of the system with respect to the Horizontal Tail Plane (HTP) of an aircraft subject to a HTP rotation of 5 degrees follows.

The following data are defined in a text input file: names of the reference tetin (geometry) and blocking (topology) files, names of the output files to be written, the naming convention to be used, so that the program will identify all geometrical entities (curves, surfaces and materials), the operation to be performed (HTP rotation), the direction of the rotating axis, and a point of this axis.

Once the topology and geometry is identified, through pre-programmed ICEM geometrical commands, all curves and surfaces belonging to the HTP are rotated as requested. This curves and surfaces are identified due to its standard naming. In general, a standard naming for different type of objects can be included in the former data base.

In our model, the families of curves to rotate are:

C_GEOMETRIC/C_HTP_FUS (HTP-fuselage intersection curve)
C_GEOMETRIC/C_HTP_LE (HTP leading edge)
C_GEOMETRIC/C_HTP TTE (HTP trailing edge middle line)
C_GEOMETRIC/C_HTP_TTE_UP (HTP trailing edge upper line)
C_GEOMETRIC/C_HTP_TTE_LOW (HTP trailing edge lower line)

The families of surfaces to rotate are:

S_HTP/S_HTP_LOW (lower HTP surface)
S_HTP/S_HTP_UP (upper HTP surface)
S_HTP/S_HTP_TTE (HTP trailing edge surface)

Finally, the HTP-Fuselage intersection curve is deleted and recalculated and the new tetin file is written.
Before loading the blocking file, key points are identified. The ones to be used for this case (conventional tail airplane) are, according to the data base information, the following:

HTP tip (K1): as intersection of HTP leading edge curve (C_GEOMETRIC/C_HTP_LE) and HTP trailing edge middle line curve (C_GEOMETRIC/C_HTP TTE).
HTP-fuselage at the leading edge (K2): as intersection of HTP leading edge curve (C_GEOMETRIC/C_ HTP_LE) and HTP-fuselage curve (C_GEOMETRIC/C_HTP_FUS).
HTP-fuselage at the trailing edge middle line (K3): as intersection of HTP trailing edge middle line curve (C_GEOMETRIC/C_HTP_TTE) and HTP-fuselage curve (C_GEOMETRIC/C_HTP_FUS).
HTP-fuselage at the trailing edge upper line (K4): as intersection of HTP trailing edge upper line curve (C_GEOMETRIC/C_HTP_TTE_UP) and HTP-fuselage curve (C_GEOMETRIC/C_HTP_FUS).
HTP-fuselage at the trailing edge lower line (K5): as intersection of HTP trailing edge lower line curve (C_GEOMETRIC/C_HTP_TTE_LOW) and HTP-fuselage curve (C_GEOMETRIC/C_HTP_FUS).
VTP tip (K6): as intersection of VTP leading edge curve (C_GEOMETRIC/C_VTP_LE) and VTP trailing edge middle line curve (C_GEOMETRIC/C_VTP_TTE).
VTP-fuselage at the leading edge (K7): as intersection of VTP leading edge curve (C_GEOMETRIC/C_VTP_LE) and fuselage-symmetry plane curve (C_GEOMETRIC/C_FUS).

VTP-fuselage at the trailing edge symmetry plane line (K8): as intersection of VTP trailing edge symmetry plane line curve (C_GEOMETRIC/C_VTP_TTE) and VTP-fuselage curve (C_GEOMETRIC/C_VTP_FUS).
VTP-fuselage at the trailing edge non-symmetry plane line (K9): as intersection of VTP non-symmetry plane trailing edge line curve (C_GEOMETRIC/C_VTP_TTE_UP) and VTP-fuselage curve (C_GEOMETRIC/C_VTP_FUS).

Fuselage rear end upper point at the symmetry plane (K10): as intersection of fuselage-symmetry plane curve (C_GEOMETRIC/C_FUS) and fuselage rear end curve (C_GEOMETRIC/C_FUS_TTE). From the two points obtained, the one with higher Z coordinate should be taken.
Fuselage rear end lower point at the symmetry plane (K11): as intersection of fuselage-symmetry plane curve (C_GEOMETRIC/C_FUS) and fuselage rear end curve (C_GEOMETRIC/C_FUS_TTE). From the two points obtained, the one with lower Z coordinate should be taken.
After selecting these key points, the original blocking file is automatically loaded and the corresponding key vertexes are identified.
Then, the following set of vertexes is obtained.
HTP leading edge vertexes (P1): from K2 to K1 along +Y direction.
HTP trailing edge middle line vertexes (P2): from K3 to K1 along +Y direction.
HTP trailing edge upper line vertexes (P3): from K4 to K1 along +Y direction.
HTP trailing edge lower line vertexes (P4): from K5 to K1 along +Y direction.
HTP surface vertexes (P5): from each vertex of set P1 to the corresponding vertex in set P3, a P5 subset is created by advancing in +X direction. In the same way, subsets will be created by advancing from vertexes in set P1 to vertexes in set P4.
Vertexes upstream the HTP leading edge (P6): from each vertex of set P1, a P6 subset is defined by advancing 2 steps in -X direction.
HTP surrounding vertexes (P7): from each vertex in set P5, a P7 subset is created by advancing three steps +Z or -Z direction, depending on the position of the reference vertex (upper or lower side of the HTP). Special care is taken, by searching in directions defined by a vector, when the origin of the search corresponds to the vertexes over the HTP-fuselage intersection curve, to assure that the vertexes are founded over the fuselage surface, so those vertexes between HTP and VTP and between HTP and symmetry plane are correctly identified.
HTP wake vertexes (P8). Taking as reference all vertexes from sets P2, P3 and P4, a P8 subset is created by advancing three steps in +Z direction.
Finally, all the blocks contained in the HTP material are identified. Blocks are volumetric topological entities enclosed by edges.

Firstly, the blocks belonging to the HTP are rotated. This means that automatically all vertexes associated to the HTP surface (sets P1, P2, P3, P4 and P5) are moved to their new position.

Up to this point, the blocking is adapted to the rotated geometry, but blocks surrounding the HTP are deformed, giving a poor mesh quality.

To avoid worsening of the mesh quality, after rotating the blocks, some previously identified volumetric vertexes around the HTP are automatically displaced to a new position, according to the algorithms described in step e).

To apply this method, we need, for each set of vertexes, two reference ones: the one from which the displacement is known (P) and the one that will remain in its original position ($P_n$). We will apply this algorithm to each subset of vertexes P6 and P7.

Finally, the wake vertexes (set P8) must be realigned with the new position of the trailing edge. We will move the vertexes of each subset of P8 to the Z coordinate of its corresponding P7 vertex.

Figure 2 illustrates the base mesh 31 and the modified mesh 33 after completing the rotation (only a zone around the HTP leading edge intersection is shown).

The methods and systems according to this invention are particularly applicable to the design or analysis of airplanes or any of its parts.

Modifications may be introduced into the preferred embodiment just set forth, which are comprised within the scope defined by the following claims.

**Claims**

1. A computer-aided method for adapting a multi-block mesh topology of an object (11) to a modification in its geometry resulting from an operation defined in respect to one or more spatial directions, the method being used in the design of said object (11) by means of numerical simulation in entirely or partially structured meshes, **characterised in that** it comprises the following steps:

   a) providing the starting geometry (21) of said object (11) and the starting mesh (31) topology description;
   b) finding a set of key points (25) in the starting geometry (21) as the intersections of representative surfaces or curves (27, 29) of said object (11);
   c) finding the set of key vertexes in the starting mesh (31) topology placed at said key points (25);
   d) finding all the reference vertexes involved in said operation seeking for the vertexes connected to said set of key vertexes along said one or more spatial directions;
   e) performing said operation over the starting geometry (21) and obtaining the adapted mesh topology moving said set of key vertexes to the position determined by the modified geometry (23) and moving the rest of reference vertexes proportionally to the displacement of the corresponding key vertex.

2. A method according to claim 1, **characterised in that** step b) is carried out using a data base containing identification data of the key points for a set of standard geometry types.

3. A method according to any of claims 1-2, **characterised in that** said operation is one of the following: a translation, a rotation, a reprojection.

4. A method according to any of claims 1-3, **characterised in that** simulation tool is a CFD tool and said object (11) is an aircraft or a part of an aircraft.

5. A system for adapting a multi-block structured mesh topology of an object (11) to a modification in its geometry resulting from an operation defined in respect to one or more directions, the system being used in the design of said object by means of numerical simulation in entirely or partially structured meshes, **characterised in that** it comprises:

   a) A computer-implemented simulation model of said object (11).
   b) Computer programs for carrying out at least in part the following operations:
   b1) loading the starting geometry (21) of said object (11) and the starting mesh (31) topology description;
   b2) finding a set of key points (25) in the starting geometry (21) as the intersections of representative surfaces or curves (27, 29) of said object (11);
   b3) finding the set of key vertexes in the starting mesh (31) topology placed at said key points (25);
   b4) finding all the reference vertexes involved in said operation seeking for the vertexes connected to said set of key vertexes along said one or more spatial directions;
   b5) performing said operation over the starting geometry (21) and obtaining the adapted mesh topology moving said set of key vertexes to the position determined by the modified geometry (23) and moving the rest of reference vertexes proportionally to the displacement of the corresponding key vertex.

6. A system according to claim 5, **characterised in that** it also comprises a data base containing identification data of the key points for a set of standard geometry types.

7. A method according to any of claims 5-6, **characterised in that** said operation is one of the following: a translation, a rotation, a reprojection.

8. A method according to any of claims 5-7, **characterised in that** said simulation model is a CFD model and said object (11) is an aircraft or a part of an aircraft.

FIG. 1

FIG. 2

FIG. 3

FIG. 4

FIG. 5